# EUROPÄISCHE PATENTSCHRIFT

(11) **EP 0 407 502 B1**
(45) Veröffentlichungstag und Bekanntmachung des Hinweises auf die Patenterteilung: **11.08.1993**
(21) Anmeldenummer: 89912387.1
(22) Anmeldetag: 21.11.1989
(51) Int. Cl.: G02B 6/44

(54) **SELBSTTRAGENDES OPTISCHES KABEL**
SELF-SUPPORTING OPTICAL CABLE
CABLE OPTIQUE AUTOPORTEUR

(30) Priorität: 05.12.1988 CH 4501/88
(43) Veröffentlichungstag der Anmeldung: 16.01.1991
(73) Patentinhaber: Kupferdraht-Isolierwerk AG Wildegg, CH-5103 Wildegg (CH)
(72) Erfinder: VOSER, Othmar, CH-5115 Möriken (CH)
(74) Vertreter: Bruderer, Werner
(86) Internationale Anmeldenummer: CH8900204
(87) Internationale Veröffentlichungsnummer: WO9006530

(56) Entgegenhaltungen:
- EP-A- 0 150 768
- EP-A- 0 251 378
- WO-A-88/06742
- DE-A- 3 319 370
- FR-A- 2 444 282
- GB-A- 2 090 995
- GB-A- 2 173 471

## Beschreibung

Die Erfindung betrifft ein selbsttragendes optisches Kabel mit einer aus mindestens einem optischen Leiter und einem Zentralelement bestehenden Seele, mit mehreren in einer konzentrischen Verstärkungslage um diese Seele und mit Abstand zu dieser angeordneten Zugentlastungselementen, wobei diese Elemente einen druckfesten Mantel bilden und einem äusseren Schutzmantel.

Kabel dieser Art sind in mehreren Ausführungsarten bekannt. Dabei muss beachtet werden, dass die optischen Leiter ausserordentlich empfindlich auf Zug-, Druck- und Biegebelastungen sind. Die Zugentlastungselemente bzw. die Verstärkungslage haben deshalb die Aufgabe, die von ihnen umschlossenen optischen Leiter möglichst optimal von Zug- und Biegebelastungen zu entlasten. Aus der französischen Patentanmeldung, Publikation Nr. 2 444 282 ist ein zug- und druckfestes Seekabel mit optischen Leitern bekannt, welches einen druckfesten steifen Mantel aufweist. Dieser Mantel ist aus einer Vielzahl von profilierten Stahldrähten gebildet, welche seitlich aneinander anliegen, und deren Höhe grösser ist als deren Breite. Deshalb ist der druckfeste Mantel und damit das beschriebene Kabel sehr schwer und steif. ein derartiges Kabel ist als selbsttragendes Kabel, insbesondere als Freileitungskabel, ungeeignet und findet deshalb nur als Seekabel Verwendung.

Ein Luftkabel mit einem rohrförmigen Tragelement und optischen Leitern ist aus der Patentschrift DE 33 19 370 A1 bekannt. Die optischen Leiter sind hier lose in ein zentrales Schutzrohr eingelegt. Dieses Schutzrohr ist von einem geschlossenen Mantel aus Kunstharz und darin eingelegten zugfesten Fasern angeben. Dieser Mantel hat einen Durchmesser, welcher an ein mehrfaches grösser ist als der Durchmesser des Schutzrohres für die optischen Leiter. Wird für den Mantel ein weiches Harz verwendet, damit das Kabel flexibel bleibt, so ist der Mantel nicht druckfest. Wird das Harz so hart gewählt, dass auch radiale Druckbelastungen aufgenommen werden können, so ergibt sich ein relativ steifes unhandliches Kabel. Trotzdem dieser Kabelaufbau die optischen Leiter gut schützt, können die optischen Leiter gestreckt oder unzulässig gebogen werden, da ihre Anordnung im Schutzrohr nicht bestimmt und auch nicht kontrollierbar ist. Beim Einbau einer grösseren Zahl von optischen Leitern in ein derartiges Kabel können sich diese gegenseitig stören und mechanisch belasten, was zu Schäden führt. Die Sicherheit dieses Kabelaufbaues ist für die optischen Leiter ungenügend, und das Kabel ist störungsanfällig.

Ein weiteres optisches Kabel, welches die oben genannten Nachteile vermeiden soll ist gemäss der Patentanmeldung EP 150 768 A2 bekannt, wobei die Zugentlastungselemente um die optischen Leiter verseilt sind. Dabei sollen die Zugentlastungs- oder Bewehrungselemente mit einer bestimmten Schlagrichtung und einer zu berechnenden Schlaglänge um die Seele verseilt sein. Nur bei genauer Einhaltung dieser Anordnung sind die optischen Fasern vor Zugbelastungen geschützt. Die angegebene Berechnungsformel für die Bestimmung von Schlaglänge und Verseildurchmesser der Bewehrungselemente ermöglicht wohl eine theoretische Ermittlung. Wichtige Einflussfaktoren wie physikalische Konstanten und geometrische Daten bei verschiedenen Kabelaufbauten sowie Haftung zwischen den einzelnen Kabelschichten sind rechnerisch nicht zu erfassen und müssen deshalb experimentell bestimmt werden. Dies hat einen erheblichen Aufwand bei der Entwicklung derartiger Kabel zur Folge, und die entsprechenden Versuche müssen bei jeder Aenderung des Kabelaufbaues oder der geometrischen Gestalt neu durchgeführt werden. Im weiteren schützt dieser Kabelaufbau die im Inneren liegenden optischen Leiter nicht vor Druckbelastungen, welche quer zur Längsrichtung des Kabels auftreten können.

Der Erfindung liegt die Aufgabe zugrunde, einen Kabelaufbau für selbsttragende optische Kabel zu schaffen, bei welchem sich die optischen Leiter nicht gegenseitig mechanisch stören und beschädigen und die Zugentlastungselemente in einer Verstärkungslage die optischen Leiter sowohl vor Zugbelastungen wie auch vor Biege- und Druckbelastungen schützen. Die Schutzelemente gegen schädigende mechanische Belastungen und die optischen Leiter sollen mechanisch voneinander getrennt sein. Der Kabelaufbau soll einfach und für alle Dimensionen gleichermassen geeignet sein. es sollen im weiteren auch verschiedene Ausführungen der Verseilrichtung und der Schlaglänge der Verstärkungselemente möglich sein.

Diese Aufgabe wird durch die im kennzeichnenden Teil des Patentanspruches 1 angegebenen Merkmale gelöst. Vorteilhafte Ausführungsformen ergeben sich nach den Merkmalen der abhängigen Patentansprüche.

Bei der erfindungsgemässen Lösung wird im Zentrum des Kabels mindestens ein optischer Leiter um ein Zentralelement angeordnet, wobei dieses Zentralelement und ein einzelner oder mehrere optische Leiter in bekannter Weise mit oder ohne Fülltrensen die Seele bilden. Die konzentrisch um die Seele angeordneten Zugentlastungselemente sind langgestreckte Profilkörper, welche in der Verstärkungslage seitlich aneinander anliegen und sich gegeneinander abstützen. Die Abstützung erfolgt durch direkten Kontakt der Seitenflächen oder über zwischen den Seitenflächen angeordnetes Füllmaterial. Die Profilkörper weisen einen flachen Querschnitt mit zwei Seitenflächen auf. Dadurch, dass die Seitenflächen je zweier benachbarter Zugentlastungselemente in der Verstärkungslage direkt oder über Füllmaterial aneinander anliegen, bilden die Verstärkungselemente um die Seele einen geschlossenen Mantel, welcher bei Zug- und Druckbelastungen selbsttragend wirkt und nicht in sich zusammenfallen kann. Luch bei Biegungen des erfindungsgemässen Kabels stützen sich die einzelnen Zugentlastungselemente gegeneinander ab und verhindern ein Zusammendrücken, bzw. Abflachen des kreisringförmigen Querschnittes der Verstärkungslage, wodurch die im Inneren liegenden optischen Leiter auch vor derartigen Druckbelastungen geschützt werden. Die Zugentlastungselemente sind aus in Kunstharz eingebetteten Verstärkungsfasern gebildet. Geeignete bekannte Verstärkungsfasern sind Glasfasern, Kohlenstoffasern oder sogenannte Kevlarfasern. Bei Zugbelastungen in Längsrichtung des Kabels werden die Zugkräfte von den Zugentlastungselementen aufgenommen ohne dass der Durchmesser der Verstärkungslage eingeschränkt wird. Dies ist eine Folge der in sich abgestützten Elemente der Verstärkungslage. Allfällige Längenänderungen bewirken keine Dehnung der optischen Leiter, sondern nur eine Streckung des Biegeradius' im Bereiche des Wechsels der Verseilrichtung. Da die optischen Leiter das Zentralelement nur in einer Wellenlinie umgeben und dieses nicht mehrfach vollständig umschlingen, können sie sich in Längsrichtung federartig ergeben. Die erfindungsgemässe Schlaglänge und der Wechsel der Verseilrichtung nach jedem Schlag ermöglichen Bewegungen der optischen Leiter innerhalb des Kabels, welche von den Bewegungen der Zugentlastungselemente entkoppelt sind, und zwar sowohl bei Zug- und Druckbelastungen, als auch bei Biegung des Kabels. Diese Bewegungsfähigkeit wird zusätzlich durch die Trennlage zwischen der Seele und der Verstärkungslage unterstützt. Die Seele mit den optischen Leitern ist im Hinblick auf mechanische Belastungen vollständig von den Zugentlastungselementen, bzw. der Verstärkungslage entkoppelt. Die vorteilhafte Wirkung dieser Erfindung wird unabhängig von der Verseilrichtung und der Schlaglänge der Zugentlastungselemente erreicht. Die Widerstandsfähigkeit gegen Zug-, Druck- und Biegebelastungen ist einerseits durch die geometrische Ausgestaltung der aus Profilkörpern bestehenden Zugentlastungselemente und deren Anordnung in der Verstärkungslage und anderseits durch die spezielle Verlegungsart der optischen Leiter um ein Zentralelement bestimmt. Die Kombination dieser Merkmale erlaubt die Herstellung von leichten und flexiblen Kabeln von hoher Festigkeit. Bei Anordnung eines zusätzlichen Mantels um die Verstärkungslage erlaubt die erfindungsgemässe Lösung auch die Ausführung von Kabeln, bei welchen die Zugentlastungselemente mit sehr grosser Schlaglänge um die Achse des Kabels verlaufen. Dabei ist der zusätzliche Mantel aus Kunststoff allein oder mit zusätzlichen Zugentlastungselementen gebildet. Bei geeigneter Ausgestaltung oder Anordnung der Zugentlastungselemente greift der Aussenmantel in Zwischenräume zwischen den Zugentlastungselementen ein und ist in diesen verankert. Dies verhindert das Gleiten des Aussenmantels gegenüber der Verstärkungslage. Durch Anbringen einer zusätzlichen Beschichtung aus Kolophonium auf den Zugentlastungselementen kann das Aufdrehen der Verseilung unter Zugbelastung verhindert werden. Der erfindungsgemässe Aufbau eines optischen Kabels ermöglicht die Herstellung von besonders widerstandsfähigen und trotzdem flexiblen sowie leichten und einfach herzustellenden Kabeln. Bei Bedarf kann das Kabel in bekannter Weise mit zusätzlichen metallischen Leitern ausgestattet werden.

Die Erfindung wird anhand von in den Zeichnungen dargestellten vorteilhaften Ausführungsbeispielen näher erläutert.
- Fig. 1: zeigt einen Querschnitt durch ein erfindungsgemässes optisches Kabel.
- Fig. 2: zeigt eine schematische Darstellung der Anordnung eines einzelnen optischen Leiters auf dem Zentralelement.
- Fig. 3: zeigt einen Querschnitt durch ein erfindungsgemässes optisches Kabel mit einer Verbundschicht.
- Fig. 4: zeigt einen Querschnitt durch ein Verstärkungselement mit trapezförmigem Profil.
- Fig. 5: zeigt die Querschnitte von zwei Zugentlastungselementen mit je konkaven bzw. konvexen Seitenflächen.

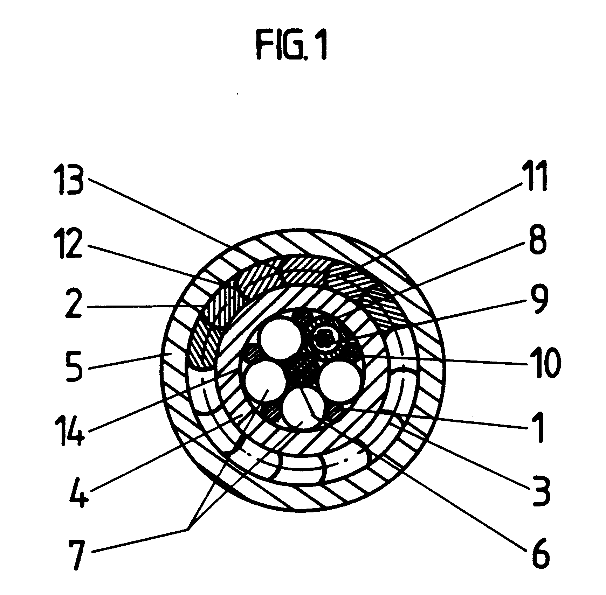

Das Kabel gemäss Figur 1 besteht aus einem im Zentrum angeordneten Zentralelement 6 und mehreren konzentrisch darum herum angeordneten optischen Leitern 7. Diese optischen Leiter 7 bestehen aus einem Schutzschlauch 8 und darin angeordneten optischen Fasern 9, welche sich im Schutzschlauch 8 axial frei bewegen können. Die Zwischenräume zwischen den optischen Leitern 7 sind in bekannter Weise mit Füllelementen 10 bestückt. Das Zentralelement 6 und die optischen Leiter 7 sowie die Füllelemente 10 bilden die Seele 1 des Kabels. Um die Seele 1 ist eine Trennlage 14 und ein Schutzmantel 4 aufgebracht, welcher die optischen Leiter 7 bei der weiteren Verarbeitung vor Beschädigungen schützt und die nachfolgende Aufbringung einer Verstärkungslage 2 erleichtert. Im dargestellten Beispiel besteht die Trennlage 14 aus zwei Schichten aus aufgewickeltem Band, wobei eine Schicht aus Polyesterfolie und die andere Schicht aus Faservlies besteht. Diese beiden Schichten weisen gegeneinander eine gute Gleitfähigkeit auf. Der Schutzmantel 4 ist aus Polyäthylen gebildet. Diese Materialkombination bietet Gewähr für eine Trennwirkung zwischen der Trennlage 14 und dem Schutzmantel 4. Die Verstärkungslage 2 besteht aus Zugentlastungselementen 11, welche in etwa einen rechteckförmigen Querschnitt aufweisen. Diese Zugentlastungselemente 11 sind lange Profilkörper mit flachem Querschnitt, welche aus Verstärkungsfasern und einem aushärtbaren Kunstharz gebildet werden. Als Verstärkungsfasern finden sogenannte Chemiefasern, z.B. Glasfasern, Kohlenstoffasern oder Aramidfasern Verwendung, welche mit einem geeigneten Kunstharz vernetzt und vor dem Verseilen zu Profilstäben geformt werden. Die Zugentlastungselemente 11 weisen je zwei Seitenflächen 12, 13 auf, wobei die Seitenfläche 12 konvex und die Seitenfläche 13 konkav geformt ist. Die Zugentlastungselemente 11 sind entlang eines mittleren Durchmesserkreises 3 konzentrisch um die Seele 1 angeordnet und bilden einen geschlossenen Verstärkungsmantel. Die Anordnung der Verstärkungselemente 11 ist so gewählt, dass je eine konvexe Seitenfläche 12 in die konkave Seitenfläche 13 des benachbarten Zugentlastungselementes 11 eingreift und dadurch ein formschlüssiger Verbund gebildet wird. Ueber der Verstärkungslage 2 ist wiederum in bekannter Welse ein Kabelmantel 5 aufgebracht, welcher die darunterliegenden Kabelschichten vor Witterungseinflüssen und schädlichen Strahlungen schützt. Die Verstärkungselemente 11 sind an die Seele 1 verseilt und nehmen alle auf das Kabel einwirkenden Zugbelastungen auf. Bei Biegungen oder seitlichen Druckbelastungen des Kabels bilden sie einen verformungsstabilen Mantel, welcher die optischen Leiter 7 vor Druckbelastungen schützt. Die Zugentlastungselemente 11 bilden durch die formschlüssige Verbindung der Seitenflächen bereits einen sehr stabilen Verband, welcher zusätzlich noch durch den Kabelmantel 5 und den Schutzmantel 4 verstärkt wird. Kabelmantel 5 und Schutzmantel 4 bewirken, dass die Zugentlastungselemente 11 auch bei extremer Belastung nicht aus ihrer gegenseitigen Lage ausgelenkt werden können. Das in Figur 1 dargestellte Kabel weist einen Aussendurchmesser von ca. 20 mm auf, und die Zugentlastungselemente 11 sind 3 mm breit und 2 mm hoch.

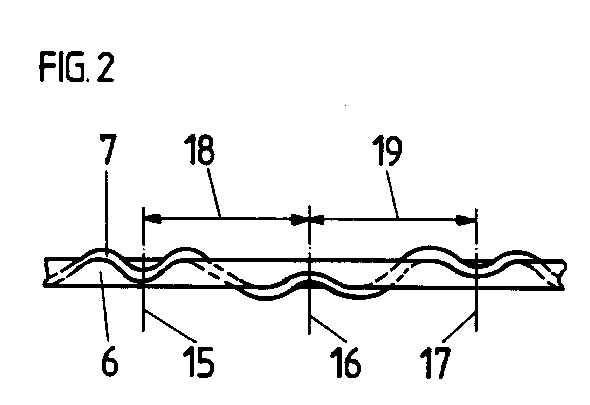

Figur 2 zeigt in schematischer Weise wie die optischen Leiter 7 um das Zentralelement 6 verseilt, bzw. angeordnet sind. Zur Vereinfachung ist nur ein optischer Leiter 7 dargestellt, trotzdem die Lage aus fünf parallel verlaufenden derartigen Leitern 7 besteht. Das Zentralelement 6 ist aus einem bekannten geeigneten Material, z.B. aus mit Kevlar verstärktem Polyäthylen oder in Kunstharz eingebetteten Glasfasern gebildet. Der optische Leiter 7 ist wellenförmig um das Zentralelement 6 verseilt, wobei die Richtung der Verseilung jeweils nach jedem Schlag an den Punkten 15, 16 und 17 wechselt. Ein Schlag entspricht dabei der Länge der Pfeile 18, bzw. 19. Im Bereiche der Länge des Pfeiles 18 ist deshalb der optische Leiter 7 nach links verseilt, und im Bereiche des Pfeiles 19 nach rechts. Die Länge der einzelnen Schläge ist so gewählt, dass die Krümmung des optischen Leiters 7 im Bereiche der Wendepunkte 15, 16 und 17 kleiner ist als die zulässige Krümmung. Im dargestellten Beispiel ist die Schlaglänge 18, 19 etwa 85 mm, wobei das Zentralelement einen Durchmesser von 2,5 mm und die optischen Leiter 7 einen Durchmesser von 3 mm aufweisen. Bei Biegung des gesamten Kabels können sich die optischen Leiter 7 federartig an die Stauchungen und Dehnungen anpassen, ohne dass die kritische Krümmung an irgendeiner Stelle überschritten wird. Die Bewegungen der optischen Leiter 7 sind vollständig unabhängig von den Bewegungen der Zugentlastungselemente und von diesen entkoppelt. Einschnürungen der optischen Leiter 7 um das Zentralelement 6 sind nicht möglich, und es entstehen somit keine störenden Radialdrücke auf die optischen Leiter.

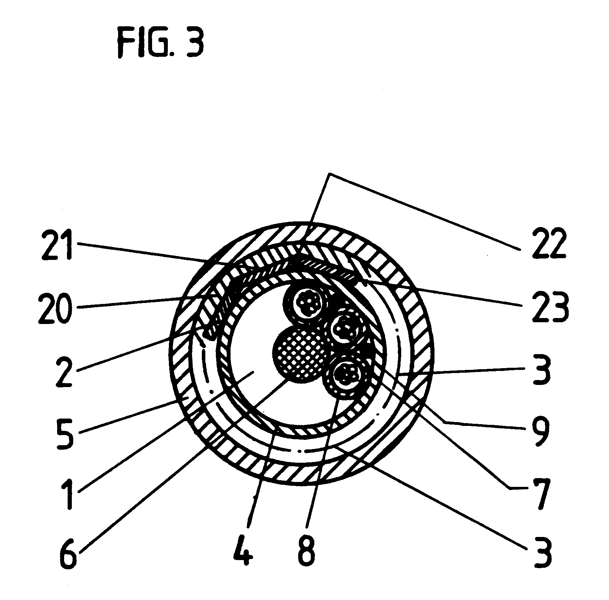

Das Kabel gemäss Figur 3 weist ebenfalls eine Seele 1 bestehend aus einem Zentralelement 6 und optischen Leitern 7 mit Schutzschläuchen 8 und optischen Fasern 9 auf. Die Seele 1 ist von einem Schutzmantel 4 umgeben, und die Aussenfläche des Kabels wird wiederum von einem Kabelmantel 5 begrenzt. Die Verstärkungslage 2 besteht bei diesem Beispiel aus Zugentlastungselementen 21, welche die Form von flachen rechteckigen Stäben aufweisen. Die Zugentlastungselemente 21 weisen Seitenflächen 22 und 23 auf, welche im Bereiche des mittleren Durchmesserkreises 3 aneinander anliegen. Die Seitenflächen 22, 23 schneiden die Peripherie des mittleren Durchmesserkreises 3 etwa rechtwinklig. Um die Verstärkungslage 2 bzw. die konzentrisch um die Seele 1 verseilten Zugentlastungselemente 21 ist ein zusätzlicher Mantel 20 aufextrudiert, welcher mit den Zugentlastungselementen 21 eine Verbundschicht bildet und allfällige Lücken zwischen den Seitenflächen 22, 23 ausfüllt. Dadurch ergibt sich eine ausserordentlich stabile Verstärkungslage 2, und der Mantel 20 wird zwischen den Zugentlastungselementen 21 verankert. Der zusätzliche Mantel 20 kann aus dem gleichen Material wie der Kabelmantel 5 bestehen oder aus einem Material mit besonders guten Bindeeigenschaften. Da die Querschnittsform der Zugentlastungselemente 21 einfach ausgebildet ist, lassen sich diese Profilkörper sehr einfach herstellen und lassen sich auch in einfacher Weise an die verschiedenen Durchmesserabmessungen des Kreises 3 anpassen. Diese Ausfürungsform eines erfindungsgemässen Kabels ist insbesondere für die Anwendung als Luftkabel mit relativ geringen Spannweiten, z.B. bis 100 Meter geeignet. Als Zugentlastungselemente 21 werden drei rechteckige Profilstäbe mit den Abmessungen 6 x 0,5 mm eingesetzt. Die Seitenflächen können auch nach aussen gewölbt sein. Die Stäbe bestehen aus nebeneinander angeordneten parallel laufenden Garnen aus Chemiefasern, welche in einem Zweikomponentenkunstharz getränkt und ausgehärtet sind. Diese Zugentlastungselemente 21 können infolge ihrer Ausrichtung auf die Laufrichtung der Kabel sehr hohe Spannkräfte aufnehmen und lassen trotzdem die gewünschte Biegbarkeit des Kabels zu.

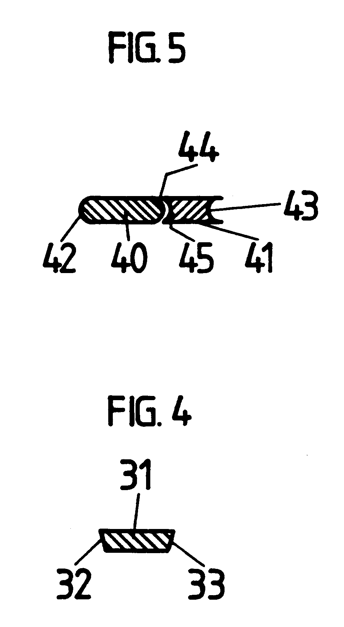

In Figur 4 ist ein weiteres Zugentlastungselement 31 dargestellt, dessen Querschnitt sich relativ leicht herstellen lässt. Die Querschnittsfläche weist dabei die Form eines Trapezes auf, wobei die Schenkel des Trapezes die Seitenflächen 32 und 33 bilden. Bei Einsatz dieser Profilkörper als Zugentlastungselemente 31 ergibt sich in der Verstärkungslage ein besonders form- und druckstabiler Mantel, da sich die einzelnen Zugentlastungselemente 31 gewölbeartig gegenseitig abstützen. Eine weitere Ausführungsform von Verstärkungselementen 40, 41 ist in Figur 5 dargestellt, wobei hier Verstärkungselemente mit zwei verschiedenen Querschnittsflächen miteinander kombiniert werden. Das Verstärkungselement 40 weist einen flachen, rechteckförmigen Querschnitt auf, wobei die beiden Seitenflächen 42, 44 konvex nach aussen gewölbt sind. Das benachbarte Verstärkungselement 41 weist Seitenflächen 43, 45 auf, welche in der gleichen Weise, jedoch konkav nach innen gekrümmt sind. Diese Kombination von Zugentlastungselementen 40, 41 ermöglicht den Einsatz von Elementen mit gleichen Querschnittsabmessungen für verschieden grosse mittlere Durchmesserkreise 3. Dies ist möglich, weil diese Elemente 40, 41 in verschiedenen Winkeln seitlich aneinandergefügt werden können, ohne dass die formschlüssige Verbindung aufgehoben würde.

Bei allen Ausführungsformen der Zugentlastungselemente 11, 21, 31, 40 und 41 erweist sich der Umstand als besonders vorteilhaft, dass sich die Verstärkungslage 2 bei Zugbelastungen in Längsrichtung des Kabels nicht zusammenschnürt. Dies ist eine Folge der seitlichen Abstützung und der formschlüssigen Verbindung zwischen den Seitenflächen 12, 13 gemäss Figur 1, 22, 23 gemäss Figur 3, 32, 33 gemäss Figur 4, und 42, 44, bzw. 43, 45 in Figur 5. Auf die im Bereiche der Seele 1 angeordneten optischen Leiter 7 wirken deshalb keine Spannungen infolge Zugbelastung des Kabels. Auch wenn sich nur ein optischer Leiter 7 mit entsprechenden Füllelementen 10 in der Seele 1 befindet, ergibt sich ein form- und belastungsstabiles Kabel, bei welchem der Lichtleiter 7 weder bei zulässigen Biege-, noch bei Zugbelastungen unzulässig deformiert wird.

Dehnungen des Kabels werden wie zu Figur 2 beschrieben durch die erfindungsgemässe Verseilung der optischen Leiter 7 um das Zentralelement 6 ausgeglichen, indem sich die optischen Leiter 7 im Bereiche der Wendepunkte der Verseilrichtung federartig ergeben können. Diese Lageveränderungen sind derart gering, dass keine störenden Belastungen der optischen Leiter 7, bzw. der optischen Fasern 9 auftreten. Die empfindlichen optischen Fasern 9 sind mehrfach geschützt. Erstens durch die Zugentlastungselemente 11, 21, 31, 40 und 41, bzw. die durch diese gebildete Verstärkungslage 2, zweitens durch die spezielle Verseilung der optischen Leiter 7 um das Zentralelement 6 und drittens durch die lose Anordnung der optischen Fasern 9 im Schutzschlauch 8 der optischen Leiter 7. Die erfindungsgemässen Kabel sind sowohl für Freileitungen, wie auch für Verlegungen in Kabelschächten oder andere Verlegungsarten geeignet.

## Patentansprüche

1. Selbsttragendes optisches Kabel mit einer aus mindestens einem optischen Leiter (7) und einem Zentralelement (6) bestehenden Seele, mit mehreren in einer konzentrischen Verstärkungslage um diese Seele und mit Abstand zu dieser angeordneten Zugentlastungselementen (11), wobei diese Elemente einen druckfesten Mantel bilden und einem äusseren Schutzmantel, dadurch gekennzeichnet, dass jeder der optischen Leiter (7) um das Zentralelement (6) verseilt ist, wobei die Richtung der Verseilung nach jedem Schlag gewechselt ist und die Länge (18, 19) eines Schlages mindestens dem Fünffachen des Verseildurchmessers entspricht, die Zugentlastungselemente (11, 21) aus Verstärkungsfasern gebildete Profilkörper mit flachem Querschnitt sind, die Seitenflächen (12, 13 bzw. 22, 23) je zweier benachbarter Zugentlastungselemente (11 oder 21) direkt oder über Füllmaterial aneinander abgestützt sind, und alle Zugentlastungselemente (11 bzw. 21) der Verstärkungslage (2) mittels der formschlüssig direkt miteinander oder über das Füllmaterial verbundenen Seitenflächen (12, 13 bzw. 22, 23) einen gegen Veränderungen des Durchmessers stabilen, geschlossenen Mantel bilden.

2. Selbsttragendes optisches Kabel nach Patentanspruch 1, dadurch gekennzeichnet, dass die Lage der verseilten optischen Leiter (7) von einer Trennlage (14) umgeben ist und diese Trennlage (14) aus mindestens einem Kunststoffolien- oder Textilband gewickelt ist.

3. Selbsttragendes optisches Kabel nach einem der Patentansprüche 1 oder 2, dadurch gekennzeichnet, dass die einzelnen Zugentlastungselemente (11, 21) aus einer Vielzahl von strangartig zueinander angeordneten Verstärkungsfasern und einem aushärtbaren Bindemittel bestehen.

4. Selbsttragendes optisches Kabel nach einem der Patentansprüche 1 bis 3, dadurch gekennzeichnet, dass die Zugentlastungselemente (11, 21) einen Querschnitt aufweisen, dessen Breite in Richtung der Peripherie des mittleren Durchmesserkreises (3) der Verstärkungslage (2) gemessen mindestens um den Faktor 1,3 grösser ist als die Höhe rechtwinklig dazu.

5. Selbsttragendes optisches Kabel nach einem der Patentansprüche 1 bin 4, dadurch gekennzeichnet, dass die Zugentlastungselemente (11, 21) mit einem haftungsverstärkenden Harz beschichtet sind und dieses Harz Kolophonium oder ein Harz der gleichen Art ist.

6. Selbsttragendes optisches Kabel nach einem der Patentansprüche 1 bis 5, dadurch gekennzeichnet, dass zwischen der Seele (1) mit mindestens einem optischen Leiter (7) und der Verstärkungslage (2) eine Zwischenlage (4) aus Schutz- und Füllmaterial und konzentrisch um die Verstärkungslage (2) ein Schutzmantel (5) angeordnet ist.

7. Selbsttragendes optisches Kabel nach einem der Patentansprüche 1 bis 6, dadurch gekennzeichnet, dass um die Verstärkungslage (2) aus Zugentlastungselementen (21) ein Mantel (20) angeordnet ist, und dieser Mantel (20) mit der Verstärkungslage (2) eine Verbundschicht bildet.

8. Selbsttragendes optisches Kabel nach einem der Patentansprüche 1 bis 7, dadurch gekennzeichnet, dass die Zugentlastungselemente (12, 21) der Verstärkungslage (2) mit einem seitlichen Zwischenraum zueinander angeordnet sind und Teile des Schutzmantels (5) oder des Zusatzmantels (20) in die Zwischenräume zwischen den Zugentlastungselementen eingreifen.

9. Selbsttragendes optisches Kabel nach einem der Patentansprüche 1 bis 8, dadurch gekennzeichnet, dass zwei oder mehrere Verstärkungslagen (2) mit Zugentlastungselementen übereinander angeordnet sind.

10. Selbsttragendes optisches Kabel nach einem der Patentansprüche 1 bis 9, dadurch gekennzeichnet, dass das Kabel zusätzlich zu den optischen Leitern (7) mindestens einen metallischen Leiter aufweist.

11. Selbsttragendes optisches Kabel nach Patentanspruch 4, dadurch gekennzeichnet, dass die Querschnittsfläche der Zugentlastungselemente (31) durch ein Trapez begrenzt ist und die beiden Schenkel des Trapezes gegen das Zentrum des Kabels konvergieren und je in einer Seitenfläche (32, 33) des Zugentlastungselementes (31) liegen.

12. Selbsttragendes optisches Kabel nach Patentanspruch 4, dadurch gekennzeichnet, dass die Querschnittsfläche der Zugentlastungselemente (11) rechteckförmig ist und pro Zugentlastungselement (11) eine Seitenfläche (13) konkav und die zweite (12) konvex ausgebildet ist.

13. Selbsttragendes optisches Kabel nach Patentanspruch 4, dadurch gekennzeichnet, dass die Querschnittsfläche der Zugentlastungselemente (40, 41) rechteckförmig ist und in Richtung des mittleren Durchmesserkreises (3) der Verstärkungslage (2) abwechslungsweise ein Element (41) zwei konkave Seitenflächen (43, 15) und das nächste Element (40) zwei konvexe Seitenflächen (42, 44) aufweist.

## Claims

1. A self-supporting optical cable comprising a core composed of at least one optical conductor (7) and a central element (6), comprising a plurality of tension relief elements (11) arranged in a concentric reinforcing layer around this core and at a distance therefrom, where said elements form a pressure-resistant sheath, and comprising an external protective sheath, characterised in that each of the optical conductors (7) is stranded around the central element (6), where the direction of the stranding is changed following each turn and the length (18, 19) of a turn corresponds to at least five times the stranding diameter, the tension relief elements (11, 21) are profiled members which possess a flat cross-section and are formed from reinforcing fibres, the side surfaces (12, 13 and 22, 23) of two respective, adjacent tension relief elements (11 or 21) are braced against one another directly or via filler material, and by means of the side surfaces (12, 13 and 22, 23), which latter are positively connected to one another directly or via the filler material, all the tension relief elements (11 and 21) of the reinforcing layer (2) form a continuous sheath which is stable with respect to changes in the diameter.

2. A self-supporting optical cable as claimed in Claim 1, characterised in that the layer of stranded optical conductors (7) is surrounded by a separating layer (14) and this separating layer (14) is wound from at least one plastics foil- or textile strip.

3. A self-supporting optical cable as claimed in one of Claims 1 or 2, characterised in that the individual tension relief elements (11, 21) consist of a plurality of reinforcing fibres stranded-together and of a hardenable bonding agent.

4. A self-supporting optical cable as claimed in one of Claims 1 to 3, characterised in that the tension relief elements (11, 21) possess a cross-section whose width, measured in the direction of the periphery of the central diameter circle (3) of the reinforcing layer (2), is at least 1.3 times greater than the height at right angles thereto.

5. A self-supporting optical cable as claimed in one of Claims 1 to 4, characterised in that the tension relief elements (11, 21) are coated with an adhesion-reinforcing resin and this resin is colophony or a resin of the same type.

6. A self-supporting optical cable as claimed in one of Claims 1 to 5, characterised in that an intermediate layer (4) of protective- and filler material is arranged between the reinforcing layer (2) and the core (1) comprising at least one optical conductor (7), and a protective sheath (5) is arranged concentrically around the reinforcing layer (2).

7. A self-supporting optical cable as claimed in one of Claims 1 to 6, characterised in that a sheath (20) is arranged around the reinforcing layer (2) comprising tension relief elements (21), and this sheath (20) forms a composite layer with the reinforcing layer (2).

8. A self-supporting optical cable as claimed in one of Claims 1 to 7, characterised in that the tension relief elements (12, 21) of the reinforcing layer (2) are disposed with a lateral gap between them, and parts of the protective sheath (5) or of the additional sheath (20) engage into the gaps between the tension relief elements.

9. A self-supporting optical cable as claimed in one of Claims 1 to 8, characterised in that two or more reinforcing layers (2) comprising tension relief elements are disposed one above another.

10. A self-supporting optical cable as claimed in one of Claims 1 to 9, characterised in that the cable comprises at least one metallic conductor in addition to the optical conductors (7).

11. A self-supporting optical cable as claimed in Claim 4, characterised in that the cross-sectional surface area of the tension relief elements (31) is delimited by a trapezium, and the two legs of the trapezium converge towards the centre of the cable and are each located in a respective side surface (32, 33) of the tension relief element (31).

12. A self-supporting optical cable as claimed in Claim 4, characterised in that the cross-sectional surface area of the tension relief elements (11) is rectangular and in the case of each tension relief element (11) one side surface (13) is of concave formation and the second side surface (12) is of convex formation.

13. A self-supporting optical cable as claimed in Claim 4, characterised in that the cross-sectional surface area of the tension relief elements (40, 41) is rectangular, and in the direction of the central diameter circle (3) of the reinforcing layer (2) alternately one element (41) possesses two concave side surfaces (43, 45) and the next element (40) possesses two convex side surfaces (42, 44).

## Revendications

1. Câble optique autoporteur comprenant une âme constituée par au moins un conducteur optique et un élément central, et comprenant plusieurs éléments anti-traction agencés dans une couche de renforcement concentrique autour de cette âme et à une certaine distance de celle-ci, ces éléments formant une enveloppe résistant à la pression et une enveloppe de protection extérieure, caractérisé en ce que les conducteurs optiques (7) sont câblés autour d'un élément central (6), le sens du câblage étant alterné après chaque tour et la longueur (18,19) d'un tour correspondant au moins au quintuple du diamètre de câblage, en ce que les éléments anti-traction (11, 21) ont des corps profilés, qui présentent une section transversale aplatie et qui sont formés par des fibres de renforcement, en ce que les surfaces latérales (12, 13 et respectivement 22, 23) de chaque fois deux éléments anti-traction adjacents (11 ou 21) sont en appui l'un sur l'autre directement ou par l'intermédiaire de matière de rembourrage et en ce que tous les éléments anti-traction (11 et respectivement 21) de la couche de renforcement (2) forment, au moyen des surfaces latérales (12, 13 et respectivement 22, 23) reliées l'une à l'autre par une liaison de forme, une enveloppe fermée et stable quant aux variations du diamètre.

2. Câble optique autoporteur suivant la revendication 1, caractérisé en ce que la couche du conducteur optique câblé (7) est entourée par une couche de séparation (14) et en ce que cette couche de séparation (14) est enroulée à partir d'au moins une bande mince en matière synthétique ou une bande textile.

3. Câble optique autoporteur suivant l'une des revendications 1 ou 2, caractérisé en ce que les différents éléments anti-traction (11, 21) sont constitués par plusieurs fibres de renforcement agencées en écheveau l'une par rapport à l'autre et par un agent de liaison durcissable.

4. Câble optique autoporteur suivant l'une des revendications 1 à 3, caractérisé en ce que les éléments anti-traction (11, 21) présentent une section transversale dont la largeur mesurée suivant la direction de la périphérie du cercle diamétral central (3) de la couche de renforcement (2) dépasse la hauteur perpendiculaire à celle-ci d'au moins le facteur 1,3.

5. Câble optique autoporteur suivant l'une des revendications 1 à 4, caractérisé en ce que les éléments anti-traction (11, 21) sont enduits d'une résine renforçant l'adhérence et en ce que cette résine est de la colophane ou une résine du même type.

6. Câble optique autoporteur suivant l'une des revendications 1 à 5, caractérisé en ce que entre l'âme (1) comprenant au moins un conducteur optique (7) et la couche de renforcement (2) est agencée une couche intermédiaire (4) en matière de protection et de rembourrage et en ce qu'une enveloppe de protection (5) est agencée concentriquement autour de la couche de renforcement (2).

7. Câble optique autoporteur suivant l'une des revendications 1 à 6, caractérisé en ce qu'une enveloppe (20) est agencée autour de la couche de renforcement (2) en éléments anti-traction (21) et en ce que cette enveloppe (20) forme avec la couche de renforcement (2) une couche composite.

8. Câble optique autoporteur suivant l'une des revendications 1 à 7, caractérisé en ce que les éléments anti-traction (12, 21) de la couche de renforcement (2) sont agencés l'un par rapport à l'autre avec un espace intermédiaire latéral et en ce que des parties de l'enveloppe de protection (5) ou de l'enveloppe additionnelle (20) s'engagent dans les espaces intermédiaires situés entre les éléments anti-traction.

9. Câble optique autoporteur suivant l'une des revendications 1 à 8, caractérisé en ce que deux ou plusieurs couches de renforcement (2) comprenant des éléments anti-traction sont agencées l'une au-dessus de l'autre.

10. Câble optique autoporteur suivant l'une des revendications 1 à 9, caractérisé en ce que le câble présente outre les conducteurs optiques (7) au moins un conducteur métallique.

11. Câble optique autoporteur suivant la revendication 4, caractérisé en ce que la surface de section transversale des éléments anti-traction (31) est limitée par un trapèze et en ce que les deux côtés latéraux du trapèze convergent vers le centre du câble et se trouvent chacun dans une surface latérale (32, 33) de l'élément anti-traction (31).

12. Câble optique autoporteur suivant la revendication 4, caractérisé en ce que la surface de section transversale des éléments anti-traction (11) est rectangulaire et en ce que, par element anti-traction (11), l'une surface latérale (13) est réalisée de manière concave et la deuxième (12) de manière convexe.

13. Câble optique autoporteur suivant la revendication 4, caractérisé en ce que la surface de section transversale des éléments anti-traction (40, 41) est rectangulaire et en ce que suivant la direction du cercle diamétral central (3) de la couche de renforcement (2) un élément (41) présente deux surface latérales concaves (43, 45) et l'élément suivant (40) deux surfaces latérales convexes (42, 44) en alternance.
